# EUROPEAN PATENT APPLICATION

(11) **EP 4 625 783 A1**
(43) Date of publication of application: **01.10.2025**
(21) Application number: 24176292.1
(22) Date of filing: 16.05.2024
(51) Int. Cl.: H02K 41/02, H02J 50/00, H02J 50/10, H02J 50/40, F16C 29/06

(54) **INTELLIGENT LINEAR MOTION DEVICE WITH WIRELESS CHARGING MODULE**

(30) Priority: 28.03.2024 CN 202410367381
(71) Applicant: TBI Motion Technology Co., Ltd., New Taipei City 238 (TW)
(72) Inventor: Liu, Sheng-En, 238 New Taipei City (TW)
(74) Representative: Schwarz & Partner Patentanwälte GmbH

(57) **Abstract**

An Intelligent linear motion device (100, 101, 102, 103, 104, 105, 106) includes a linear rail (10, 10A, 10B, 10C), a power supply (20), at least one power supply module (30, 30A, 30B), a sliding base (40, 41, 42, 43), a power module (50), and a sensor module (60). The power supply module (30, 30A, 30B) is arranged on the linear rail. The power supply module (30, 30A, 30B) includes a transmitting coil (31) and is electrically connected to the power supply (20). The power module (50) is arranged on the sliding base (40, 41, 42, 43) and the sliding base (40, 41, 42, 43) is slidably arranged on the linear rail (10, 10A, 10B, 10C). The power module (50) includes a receiving coil (51) and a power storage element (52). The receiving coil (51) interacts with the transmitting coil (31) to generate power when moving to the power supply module (30, 30A, 30B). The power storage element (52) is electrically connected to the receiving coil (51) to receive and store the power. The sensor module (60) is arranged on the sliding base (40, 41, 42, 43) and electrically connected to the power storage element (52).

## Description

### BACKGROUND

### Technical Field

Disclosed is an intelligent linear motion device, particularly an intelligent linear motion device with a wireless charging module.

### Related Art

For an existing linear slide rail element, an intelligent monitoring module (such as a monitor and other related devices) needs wires, signal wires, etc. for operation. In order to monitor a real-time value at any time, the intelligent monitoring module is mostly operated on a motion member with a linear slide rail, so power supply and signal transmission wires of the intelligent module must also be connected to the motion member with the linear slide rail, thus the wires will move with the motion member with the linear slide rail. It is important to protect the wires.

It is known that additional elements such as wire chains are used for wire protection, but this also results in a significant increase in the overall volume, and meanwhile causes more pulling force on the wires during motion, reducing the service lives of the wires, which in turn affects the smooth operation of the linear slide rail.

### SUMMARY

In view of this, an embodiment provides an intelligent linear motion device with a wireless charging module, including a linear rail, a power supply, at least one power supply module, a sliding base, a power module, and a sensor module. The power supply module is arranged at intervals on the linear rail. Each power supply module includes a transmitting coil and is electrically connected to the power supply. The sliding base is slidably arranged on the linear rail. The power module is arranged on the sliding base, and the power module includes a receiving coil and a power storage element. The receiving coil interacts with the transmitting coil to generate power when moving to the power supply module. The power storage element is electrically connected to the receiving coil to receive and store the power. The sensor module is arranged on the sliding base and electrically connected to the power storage element.

In some embodiments, at least one embedding groove is formed on an upper surface of the linear rail, and each power supply module is correspondingly arranged in each embedding groove.

In some embodiments, the power module is embedded in an inner surface of the sliding base, and the inner surface of the sliding base faces the upper surface of the linear rail.

In some embodiments, the sliding base includes a sliding base body and two end covers; the two end covers are assembled at the two opposite ends of the sliding base body in a long axis direction. One end cover includes an end cover body and an extending plate body; and the extending plate body is connected to the end cover body. The end cover body is assembled at one end of the sliding base body, and the extending plate body is inserted between the sliding base body and the linear rail; and the power module is arranged on the extending plate body.

In some embodiments, the sliding base includes a sliding base body, two end covers and an installation box; and the two end covers are assembled at the two opposite ends of the sliding base body in the long axis direction. The installation box is assembled at one of the two end covers; and the power module is arranged in the installation box.

In some embodiments, the linear rail includes a body and a bottom plate; and the bottom plate is connected to the body and extends towards the side in the direction vertical to the long axis direction to expose the body. The transmitting coil of the power supply module is arranged at a position, exposing the body, of the bottom plate; and the installation box extends to the position, exposing the body, of the bottom plate. The power module is arranged in the installation box and corresponds to the position, exposing the body, of the bottom plate.

In some embodiments, the linear rail includes a body and a bottom plate. The bottom plate is connected to the body and extends towards the side in the direction vertical to the long axis direction of the body to expose the body. The transmitting coil of the power supply module is arranged at a position, exposing the body, of the bottom plate. The sliding base includes a sliding base body and an installation box; and the installation box is assembled in the sliding base body and corresponds to the side, exposing the body, of the bottom plate. The power module is arranged in the installation box.

In some embodiments, one end of the bottom plate is bent towards the body side to form a cover cap; and the transmitting coil of the power supply module is covered by the cover cap.

In some embodiments, the power supply module further includes a bottom plate; and the bottom plate is connected to the linear rail, and one end of the bottom plate extends towards one side of the linear rail. The transmitting coil is arranged at an extending end of the bottom plate; and the sliding base includes a sliding base body and an installation box. The installation box is assembled on the side, corresponding to the extending end of the bottom plate, of the sliding base body; and the power module is arranged in the installation box.

In some embodiments, the device further includes a plurality of power supply modules; and the bottom plates of the plurality of power supply modules are sequentially connected, and the transmitting coils arranged on each bottom plate are sequentially and electrically connected.

In some embodiments, the device further includes a dust-proof cover covering the transmitting coil.

In some embodiments, the device further includes a magnetic scale arranged on one side of the linear rail in the long axis direction of the linear rail. The sensor module includes a position sensor arranged on the side, corresponding to the magnetic scale, of the sliding base.

In some embodiments, the linear rail and the sliding base are made of non-magnetic metal or alloy or ceramic.

In some embodiments, the sensor module includes at least one of a force sensor, a vibration sensor, a speed sensor, a position sensor, and a temperature sensor.

### BRIEF DESCRIPTION OF THE DRAWINGS

FIG. 1 is a three-dimensional diagram of an intelligent linear motion device according to Embodiment 1;
FIG. 2 is an exploded view of an intelligent linear motion device according to Embodiment 1;
FIG. 3 is an exploded view of an intelligent linear motion device according to Embodiment 2;
FIG. 4 is a three-dimensional diagram of an intelligent linear motion device according to Embodiment 3;
FIG. 5 is an exploded view of an intelligent linear motion device according to Embodiment 3;
FIG. 6 is a perspective diagram of a three-dimensional part of an intelligent linear motion device according to Embodiment 4;
FIG. 7 is a perspective diagram of a three-dimensional part of an intelligent linear motion device according to Embodiment 5;
FIG. 8 is a perspective diagram of a three-dimensional part of an intelligent linear motion device according to Embodiment 6;
FIG. 9 is a three-dimensional diagram of an intelligent linear motion device according to Embodiment 7;
FIG. 10 is an exploded view of an intelligent linear motion device according to Embodiment 7;
FIG. 11 is a schematic diagram of circuit connection of a power supply module of an intelligent linear motion device according to Embodiment 7;
FIG. 12 is an exploded view of an intelligent linear motion device according to Embodiment 8; and
FIG. 13 is a schematic diagram of circuit connection of a power supply module of an intelligent linear motion device according to Embodiment 8.

### DETAILED DESCRIPTION

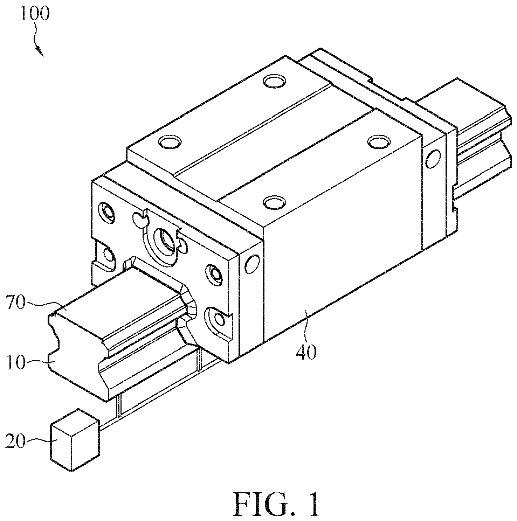

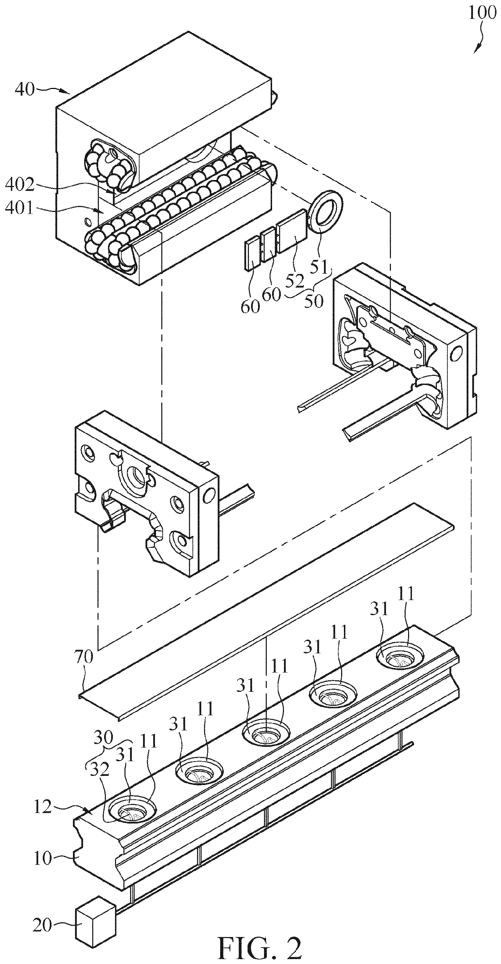

As shown in FIG. 1 to FIG. 2, FIG. 1 is a three-dimensional diagram of an intelligent linear motion device according to Embodiment 1, and FIG. 2 is an exploded view of an intelligent linear motion device according to Embodiment 1. An intelligent linear motion device 100 in this embodiment includes a linear rail 10, a power supply 20, a power supply module 30, a sliding base 40, a power module 50 and a sensor module 60. In FIG. 1, the power supply 20 is simply indicated with a square block, which may be an independent battery, a general household power supply or a factory power supply and the like. The power supply module 30 is assembled on the linear rail 10; the power supply module 30 is electrically connected to the power supply 20; and the power supply module 30 includes a transmitting coil 31. FIG. 2 shows the power supply module 30 with a plurality of transmitting coils 31, and each transmitting coil 31 is electrically connected to the power supply 20 respectively. The manner that each transmitting coil 31 is electrically connected to the power supply 20 may be that each transmitting coil is directly connected to the power supply 20 through a wire 32, or correspondingly connected to a wire or a connecting base connected to the power supply 20 respectively.

Additionally, in the present disclosure, a plurality of transmitting coils 31 or a single transmitting coil 31 may be arranged; for a linear motion device capable of quickly moving back and forth in a short distance, the power generated by the single transmitting coil 31 may be sufficient to provide the power required by the sensor module 60. Further, in a state that the single transmitting coil 31 is arranged, the transmitting coil 31 may be arranged at the starting point or the end point of the linear rail 10. Because the sliding base 40 usually stays at the starting point or the end point for a longer time than the middle position in the travel when moving, the arrangement at the starting point or the end point is also beneficial to the interaction of the transmitting coil 31 and the receiving coil 51 to generate enough required power or charge the power module 50.

Then, as shown in FIG. 1 and FIG. 2, the sliding base 40 is slidably arranged on the linear rail 10. The power module 50 is arranged on the sliding base 40, and the power module 50 can include but be not limited to a battery module. In this embodiment, the power module 50 includes a receiving coil 51 and a power storage element 52. The receiving coil 51 interacts with the transmitting coil 31 to generate power (detailed in the following) when moving to the power supply module 30. The power storage element 52 is electrically connected to the receiving coil 51 and receives and stores the power. The power storage element 52 can include but be not limited to a rechargeable battery, a storage battery and other battery elements capable of receiving or transmitting the power repeatedly. The sensor module 60 is arranged on the sliding base 40 and electrically connected to the power storage element 52.

The sensor module 60 may be at least one of a force sensor, a vibration sensor, a speed sensor, a position sensor and a temperature sensor, or a plurality of sensors of the same type, or any combination thereof. The sensor module is configured to detect and transmit monitoring data possibly required by the sliding base 40 in the motion process, for example, the motion position of the sliding base 40 to determine the operation that needs to be performed is confirmed; whether the operation needs to be stopped due to excessive vibration or not is confirmed; and whether the load is in the bearable range of the sliding base 40 or not is confirmed. By arranging the sensor module 60 and other intelligent monitoring modules, real-time monitoring data can be provided, various data of the intelligent linear motion device 100 in the operation process can be known, and real-time adjustment or corresponding actuation can be carried out as required. In addition, a Bluetooth module and other wireless transmission modules can be arranged in the sensor module 60 so as to transmit the detected data to an external controller or server.

In this embodiment, an embedding groove 11 is formed on an upper surface 12 of the linear rail 10, and the power supply module 30 is correspondingly arranged in the embedding groove 11. As shown in FIG. 2, the transmitting coil 31 is fixedly arranged in the embedding groove 11, and a wire 32 connected to the transmitting coil 31 penetrates out downwards from a penetrating hole in the middle of the embedding groove 11 to be connected to the power supply 20. Thus, the transmitting coil 31 is arranged on the upper surface 12 of the linear rail 10, and the transmitting coil 31 can get close to the receiving coil 51 of the power module 50 arranged on the sliding base 40 as much as possible. In other embodiments, the wire 32 may penetrate through the lower portion of the linear rail 10 without using the penetrating hole, another wire groove is formed on the upper surface 12 of the linear rail 10, the transmitting coil 31 is arranged in the embedding groove 11, and the wire 32 is routed along the wire groove to be connected to the power supply 20.

The intelligent linear motion device 100 can further include a dust-proof cover 70 covering the transmitting coil 31 at a position, corresponding to the embedding groove 11, of the upper surface 12 of the linear rail 10. Thus, all elements of the power supply module 30 can be protected. In addition, dust can be prevented from falling into the embedding groove 11, and the situation that dust falls down after long-time operation and influences the sliding base 40 reciprocating above the embedding groove 11 is avoided.

Further, the power module 50 is embedded in an inner surface 401 of the sliding base 40, and the inner surface 401 of the sliding base 40 faces the upper surface 12 of the linear rail 10. As shown in FIG. 2, an accommodating groove 402 is concaved in the inner surface 401 of the sliding base 40, the power module 50 and the sensor module 60 can be accommodated in the accommodating groove 402 and do not protrude out of the accommodating groove 402, and therefore the inner surface 401 of the sliding base 40 is relatively flat.

Through the above structure, when the sliding base 40 is arranged on the linear rail 10 as shown in FIG. 1 and slides away, the inner surface 401 of the sliding base 40 moves close to the upper surface 12 of the linear rail 10. At the moment, the power module 50 arranged on the inner surface 401 of the sliding base 40 is also close to the power supply module 30 arranged on the upper surface 12 of the linear rail 10. When the receiving coil 51 of the power module 50 moves to or passes through the upper portion of the transmitting coil 31, the receiving coil 51 passing through the transmitting coil 31 generates an induced current because the transmitting coil 31 continuously generates a magnetic field under the power from the power supply 20, and thus available power is further generated. The power can be stored in the power storage element 52 electrically connected to the receiving coil 51 to provide the power required by the sensor module 60 during operation.

Therefore, even if the sensor module 60 serving as the intelligent monitoring module in this embodiment is arranged on the movable sliding base 40 and moves along with the sliding base 40, there are no wires and signal wires directly connected to the sensor module 60, so no additional wires move along with the sliding base 40. Therefore, there is no need to arrange additional elements to provide wire protection, so the overall volume can be greatly reduced, and there will be no wire obstruction or pulling force on any wire during motion, and the accuracy of the sensing or the structural design and placement of the sensing element will not be influenced due to wire obstruction during multi-part sensing. Further, because there are no additional wires, the length of the linear rail 10 may be infinitely increased without being influenced by the length of the connecting wire. In addition, the sensor module 60 can include a plurality of sensors, so the demand for power is likely to be significant; and the power storage element 52 capable of storing power is arranged, so that the power continuously generated by the receiving coil 51 can be stored in advance and supplied to the sensor module 60 when needed.

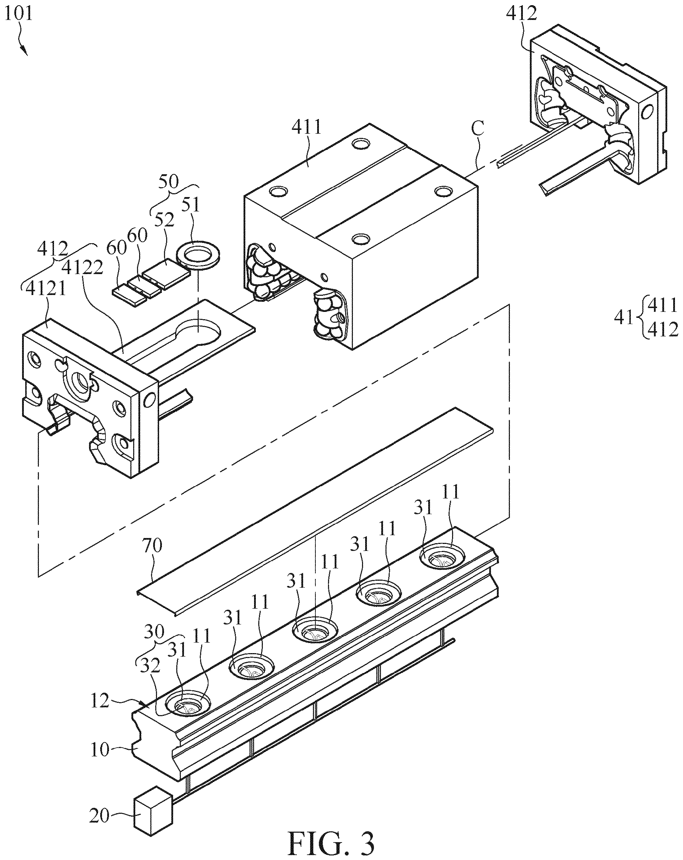

Then, as shown in FIG. 3, FIG. 3 is an exploded view of an intelligent linear motion device according to Embodiment 2. In this embodiment, the elements and connection relationships that are the same as Embodiment 1 will be represented with the same element symbols and are not otherwise described. This embodiment is different from Embodiment 1 in that the sliding base 41 includes a sliding base body 411 and two end covers 412. The two end covers 412 are assembled on the two opposite ends of the sliding base body 411 in a long axis direction C; one end cover 412 includes an end cover body 4121 and an extending plate body 4122, shown as the end cover 412 at the left in FIG. 3. The extending plate body 4122 is connected to the end cover body 4121; and the end cover body 4121 is assembled on one end of the sliding base body 411, and the extending plate body 4122 is inserted between the sliding base body 411 and the linear rail 10. The power module 50 is arranged on the extending plate body 4122.

Thus, the power module 50 may be arranged on the sliding base 41 through the extending plate body 4122 of the end cover 412, and is at a position adjacent to the power supply module 30. The sensor module 60 may be synchronously arranged on the extending plate body 4122 of the end cover 412, so as to electrically connect to the power module 50. Therefore, the power module 50 and the sensor module 60 may be assembled on the sliding base 41 by replacing the end cover 412 with relatively small volume and manufacturing cost without replacing an existing sliding base body 411, and thus the motion device is upgraded into the intelligent linear motion device 101 with the wireless charging module.

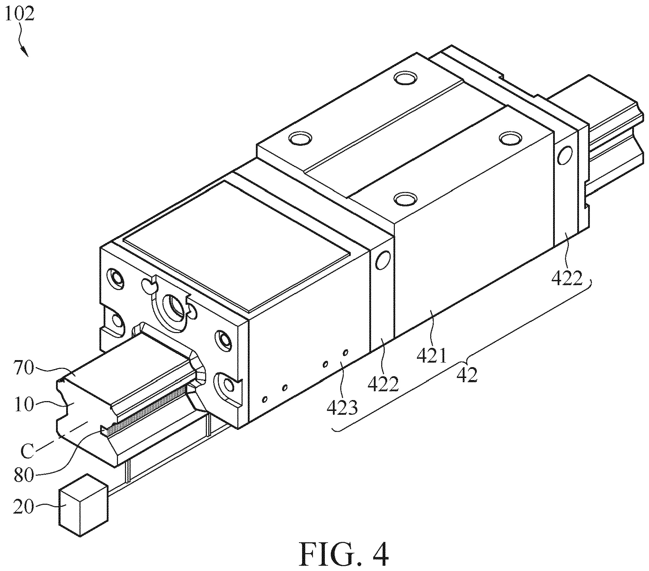

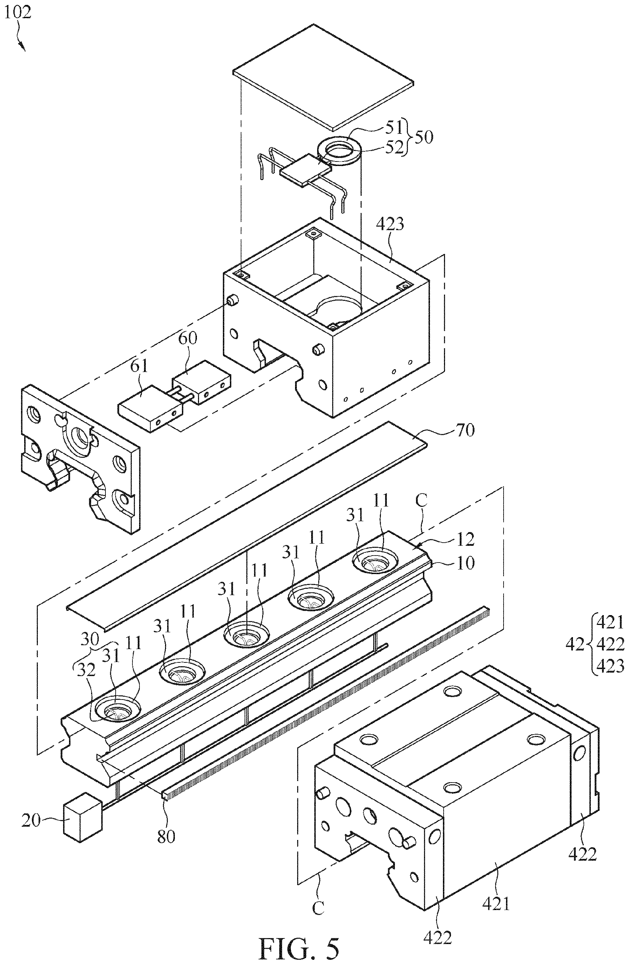

Then, as shown in FIG. 4 and FIG. 5, FIG. 4 is a three-dimensional diagram of an intelligent linear motion device according to Embodiment 3, and FIG. 5 is an exploded view of an intelligent linear motion device according to Embodiment 3. In this embodiment, the elements and connection relationships that are the same as Embodiment 1 will be represented with the same element symbols and are not otherwise described. This embodiment is different from Embodiment 1 in that the sliding base 42 includes a sliding base body 421, two end covers 422 and an installation box 423. The two end covers 422 are assembled at the two opposite ends of the sliding base body 421 in the long axis direction C, and the installation box 423 is assembled on one of the two end covers 422, can be assembled on the end cover 422 on the left as shown in FIG. 4, but is not limited to this. As shown FIG. 5, the power module 50 is arranged in the installation box 423 and is located at the bottom of the installation box 423 so as to be close to the power supply module 30 on the upper surface 12 of the linear rail 10. Similarly, the sensor module 60 can be assembled in the installation box 423 along with the power module 50, or can be arranged at any position of the installation box 423 according to the position of a required sensing assembly.

Therefore, the power module 50 and the sensor module 60 may be assembled on the sliding base 42 by additionally assembling the installation box 423 without replacing the existing sliding base body 421, so that the motion device is upgraded into the intelligent linear motion device 102 with the wireless charging module.

In addition, the intelligent linear motion device 102 in this embodiment further includes a magnetic scale 80 arranged on one side of the linear rail 10 in the long axis direction C of the linear rail 10. The sensor module 60 includes a position sensor 61 arranged on the side, corresponding to the magnetic scale 80, of the sliding base 42. Thus, when the sliding base 42 is assembled on the linear rail 10 to move as shown in FIG. 4, the position sensor 61 arranged on the installation box 423 will face the magnetic scale 80, and the accurate position of the sliding base 42 on the linear rail 10 is determined through the interaction of the position sensor 61 and the magnetic scale 80.

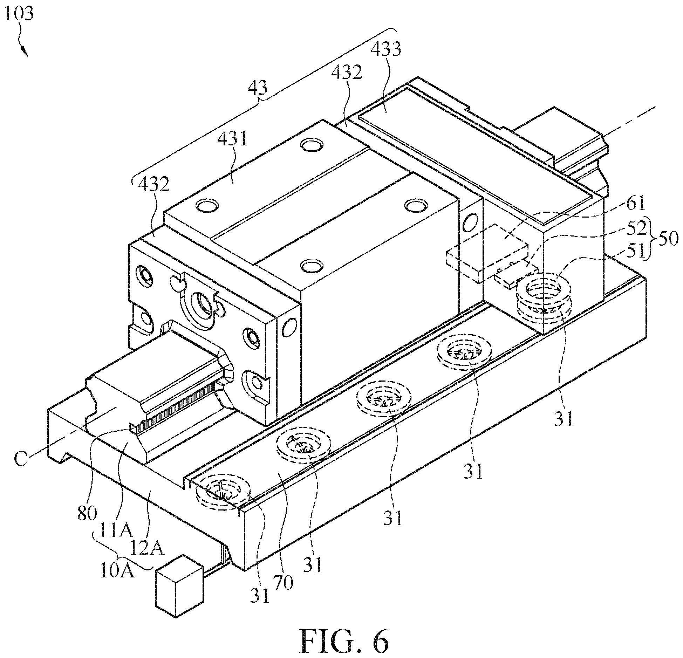

Then, as shown in FIG. 6, FIG. 6 is a perspective diagram of a three-dimensional part of an intelligent linear motion device according to Embodiment 4. In this embodiment, the elements and connection relationships that are the same as Embodiment 3 will be represented with the same element symbols and are not otherwise described. This embodiment is different from Embodiment 3 in that the linear rail 10A includes a body 11A and a bottom plate 12A; the bottom plate 12A is connected to the body 11A; and the bottom plate 12A extends towards the side in the direction vertical to the long axis direction C to expose the body 11A. The transmitting coil 31 of the power supply module 30 is arranged at the position, exposing the body 11A, of the bottom plate 12A. As shown in FIG. 6, the right side of the bottom plate 12A protrudes towards the right side of the body 11 A by a certain length to form a platform shape, and a plurality of transmitting coils 31 are arranged at the platform-shaped position.

A sliding base 43 includes a sliding base body 431, two end covers 432 and an installation box 433. The two end covers 432 are assembled at the two opposite ends of the sliding base body 431 in the long axis direction C. The installation box 433 is assembled at one of the two end covers 432, and the installation box 433 is arranged at the end cover 432 at the right end, but is not limited to this. As shown in FIG. 6, the installation box 433 extends to the position, exposing the body 11A, of the bottom plate 12A; and the power module 50 is arranged in the installation box 433 and corresponds to the position, exposing the body 11A, of the bottom plate 12A.

Therefore, the existing sliding base body 431 does not need to be replaced, the installation box 433 may be additionally assembled, and the installation box 433 and the sliding base body 431 are combined into a whole, so that the power module 50 and the sensor module 60 may be assembled on the sliding base 43. The body 11A of the existing linear rail 10A does not need to be replaced, the bottom plate 12A is assembled, and the power supply module 30 is assembled on the linear rail 10A. Therefore, the motion device can be upgraded into the intelligent linear motion device 103 with the wireless charging module.

In other embodiments, the end cover 432 does not need to be additionally arranged, the installation box 433 is directly installed on the sliding base body 431, and the installation box and the sliding base body move synchronously.

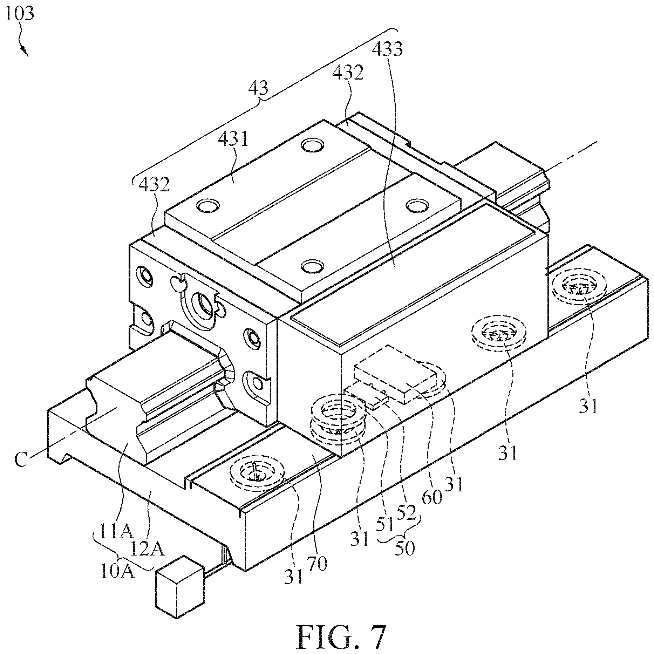

As shown in FIG. 7, FIG. 7 is a perspective diagram of a three-dimensional part of an intelligent linear motion device according to Embodiment 5. In this embodiment, the elements and connection relationships that are the same as Embodiment 4 will be represented with the same element symbols and are not otherwise described. The intelligent linear motion device 103 in this embodiment is different from Embodiment 4 in that the installation box 433 may be assembled on one side of the sliding base body 431 and corresponds to the position, exposing the body 11A, of the bottom plate 12A. The installation box 433 may be assembled on the sliding base body 431 in an adhesion, or locking or clamping manner.

Thus, it can also be achieved, as mentioned above, under the condition that the existing sliding base body 431 is not replaced, the installation box 433 may be additionally assembled, and the installation box 433 and the sliding base body 431 are combined into a whole, so that the power module 50 and the sensor module 60 are assembled on the sliding base 43. In addition, the body 11A of the existing linear rail 10A does not need to be replaced, the bottom plate 12A is assembled, so that the power supply module 30 is assembled on the linear rail 10A; and further, the installation box 433 does not make direct contact with the bottom plate 12A, that is, the installation box 433 can be suspended relative to the bottom plate 12A. Therefore, the motion device can be upgraded into the intelligent linear motion device 103 with the wireless charging module.

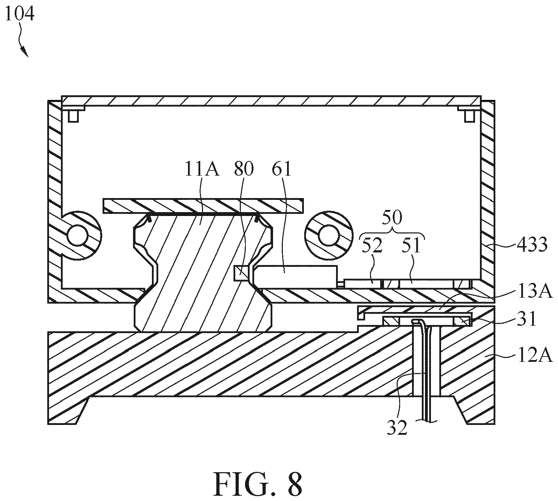

Moreover, as shown in FIG. 8, FIG. 8 is a perspective diagram of a three-dimensional part of an intelligent linear motion device according to Embodiment 6. In this embodiment, the elements and connection relationships that are the same as Embodiment 4 will be represented with the same element symbols and are not otherwise described. The intelligent linear motion device 104 in this embodiment is different from Embodiment 4 in that one tail end of the bottom plate 12A is bent towards the body 11A side to form a cover cap 13A, and the transmitting coil 31 of the power supply module 30 is covered by the cover cap 13A. This embodiment is different from Embodiment 4 in that the dust-proof cover 70 covers the transmitting coil 31, the cover cap 13A is formed by integrated molding with the bottom plate 12A in this embodiment, so additional manufacturing elements and assembling can be reduced. The cover cap 13A also has certain elastic deformation capability, so that installation and assembling of the transmitting coil 31 are convenient.

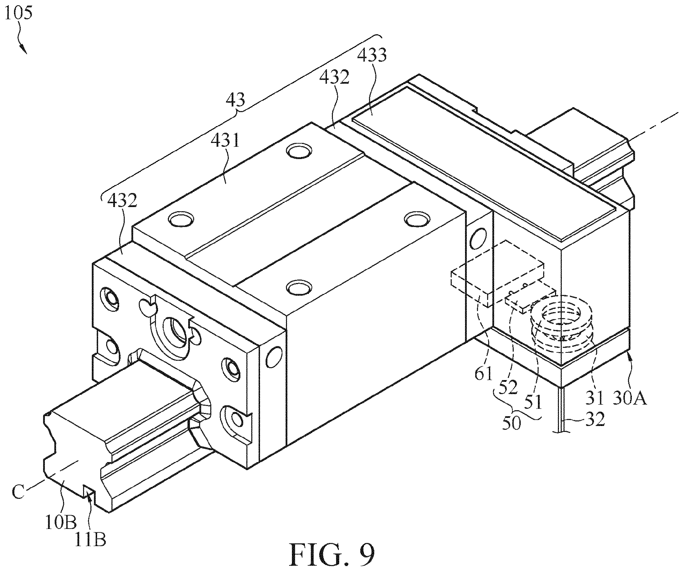

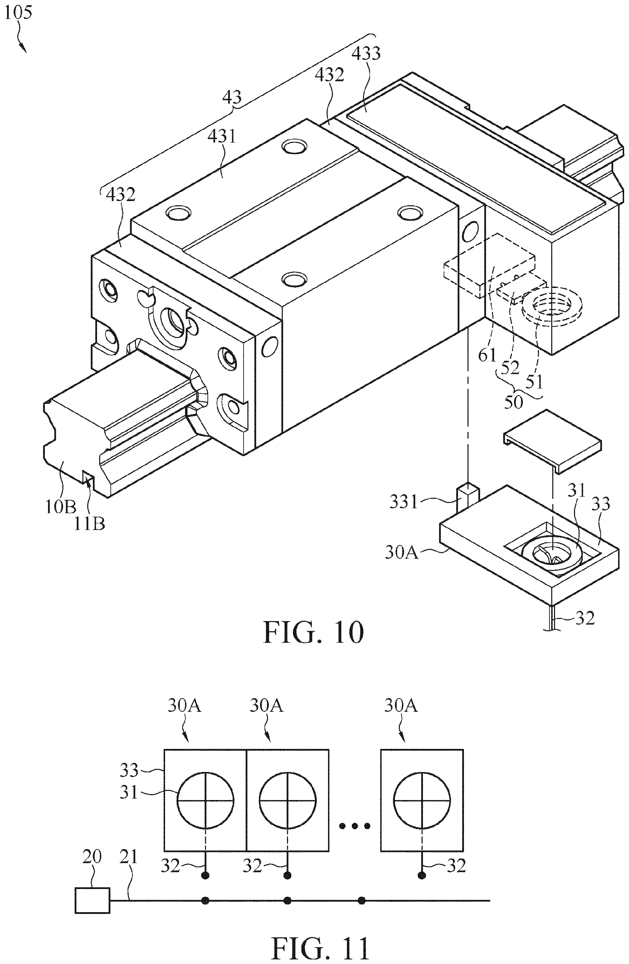

As shown in FIG. 9, FIG. 10 and FIG. 11, FIG. 9 is a three-dimensional diagram of an intelligent linear motion device according to Embodiment 7, FIG. 10 is an exploded view of an intelligent linear motion device according to Embodiment 7, and FIG. 11 is a schematic diagram of circuit connection of a power supply module of an intelligent linear motion device according to Embodiment 7. In this embodiment, the elements and connection relationships that are the same as Embodiment 4 will be represented with the same element symbols and are not otherwise described. The intelligent linear motion device 105 in this embodiment is different from Embodiment 4 in that the linear rail 10B in this embodiment is not provided with the bottom plate, and a guide groove 11B is formed on the bottom surface. The power supply module 30A further includes a bottom plate 33; the bottom plate 33 is connected to the linear rail 10B, and one end of the bottom plate extends towards one side of the linear rail 10B; and the transmitting coil 31 is arranged at the extending end of the bottom plate 33.

As shown in FIG. 10, the bottom plate 33 is in a long rectangular plate shape, and one end, close to the linear rail 10B, of the bottom plate is provided with a convex column 331; the convex column 331 is slidably arranged in the guide groove 11B, so that the bottom plate 33 can be movably assembled at the required position along the linear rail 1 0B. The bottom plate 33 extends and protrudes in the direction vertical to the long axis direction C of the linear rail 10B, so that the transmitting coil 31 of the power supply module 30A can be correspondingly located at the position where the receiving coil 51 can pass through. Although only one power supply module 30A is shown in FIG. 10 as an example, a plurality of power supply modules 30 may be assembled in other embodiments, and each power supply modules 30 is assembled to the linear rail 10B through the bottom plate 33. Each power supply module 30 may be close to one another and may also be arranged at intervals according to requirements. For example, the power supply modules 30 can be arranged at equal intervals according to the overall length of the linear rail 10B, and the power supply modules 30 can also be arranged at different intervals in a penetrating manner according to the required measurement data position.

Each power supply module 30A may be directly connected to the power supply 20 through the wire 32 connected to the transmitting coil 31 as mentioned above, or as shown in FIG. 11, the wire 32 of each power supply module 30A is connected to the wire 21 connected to the power supply 20 respectively. Therefore, the arrangement positions and the number of the power supply modules 30A can be more flexible.

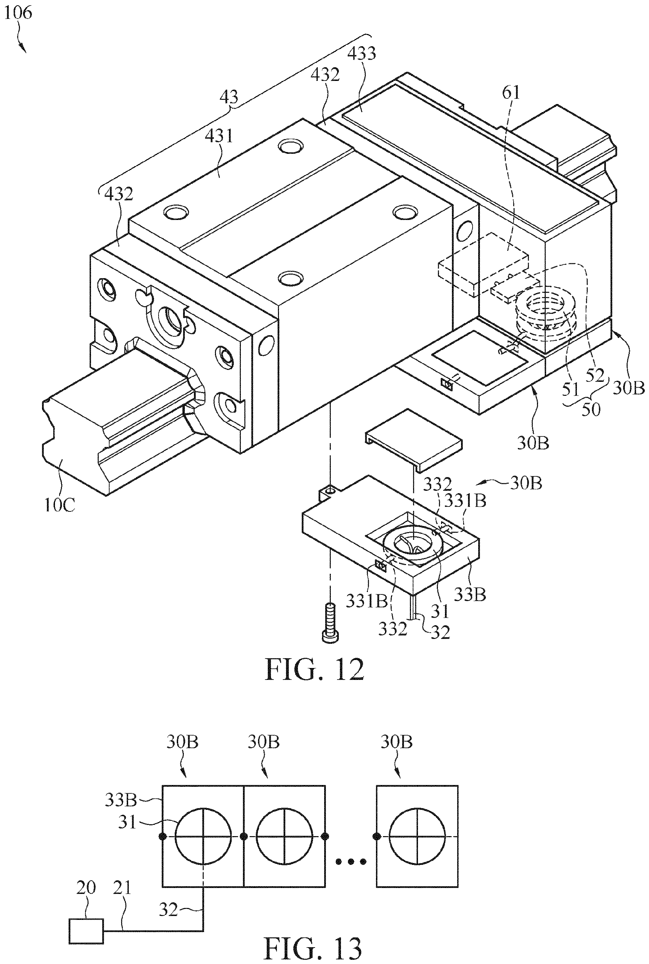

Then, as shown in FIG. 12 and FIG. 13, FIG. 12 is an exploded view of an intelligent linear motion device according to Embodiment 8, and FIG. 13 is a schematic diagram of circuit connection of a power supply module of an intelligent linear motion device according to Embodiment 8. In this embodiment, the elements and connection relationships that are the same as Embodiment 7 will be represented with the same element symbols and are not otherwise described. The intelligent linear motion device 106 in this embodiment is different from Embodiment 7 in that the bottom plates 33B of the power supply modules 30B in this embodiment are sequentially connected, and the transmitting coil 31 arranged on each bottom plate 33B is sequentially and electrically connected. As shown in FIG. 12, conductive elements 331B are arranged on the two opposite sides of the bottom plates 33B respectively, and the transmitting coils 31 arranged on the bottom plates 33B are electrically connected to the conductive elements 331B through leads 332. The adjacent bottom plates 33B are mutually and tightly attached, so that the adjacent conductive elements 331B are mutually and tightly attached to form electric connection. As shown in FIG. 13, the wire 32 of any power supply module 30B is connected to the power supply 20, and then all the power supply modules 30B in series connection can be simultaneously powered.

In addition, as shown in FIG. 12, the manner of assembling each bottom plate 33B to the linear rail 10C is different from that of Embodiment 6. In this embodiment, the bottom plates 33B may be locked to the linear rail 10C in a screw locking manner. In other embodiments, the bottom plates 33B may be detachably fixed to the linear rail 10C by utilizing quick release structures such as clamping and fixing. Therefore, the arrangement position and the number of the power supply modules 30B can be more flexible.

Further, in each embodiment above, the linear rails 10, 10A, 10B and 10C and the sliding bases 40, 41, 42 and 43 are made of non-magnetic metal or alloy or ceramic. Therefore, the effect of electromagnetic induction is prevented from being influenced.

In conclusion, the intelligent monitoring module according to each embodiment above in the present disclosure does not have the wires and signal wires directly connected to the sensor module, so no additional wires will move along with the sliding base. In addition, there is no need to arrange additional elements to provide wire protection, so the overall volume can be greatly reduced, and there will be no wire obstruction or pulling force on any wire during motion, and the accuracy of the sensing or the structural design and placement of the sensing element will not be influenced due to wire obstruction during multi-part sensing. Further, since there are no additional wires, the length of the linear rail may be infinitely increased without being influenced by the length of the connecting wire. In addition, since the sensor module can include a plurality of sensors, so the demand for power is likely to be significant; and the power storage element capable of storing power is arranged, so that the power continuously generated by the receiving coil can be stored in advance and supplied to the sensor module when needed, thus avoiding measurement interruption during operation.

In addition, by additionally arranging the installation box or the bottom plate, the motion device may be upgraded into the intelligent linear motion device with the wireless charging module under the condition of minimally changing the structure of the existing linear rail and the sliding base. Meanwhile, through various different matching manners of the installation box and the bottom plate, the setting position and number of the power supply modules can be more flexible, and the replacement is more efficient, so as to better meet the needs of users for configuration.

## Claims

1. An intelligent linear motion device (100, 101, 102, 103, 104, 105, 106) with a wireless charging module, comprising:
a linear rail (10, 10A, 10B, 10C);
a power supply (20);
at least one power supply module (30, 30A, 30B), arranged on the linear rail (10, 10A, 10B, 10C), each power supply module (30, 30A, 30B) being electrically connected to the power supply (20), each power supply module (30, 30A, 30B) comprising a transmitting coil (31);
a sliding base (40, 41, 42, 43), slidably arranged on the linear rail (10, 10A, 10B, 10C);
a power module (50), arranged on the sliding base (40, 41, 42, 43), the power module (50) comprising:
a receiving coil (51), interacting with the transmitting coil (31) to generate power when moving to the power supply module (30, 30A, 30B); and
a power storage element (52), electrically connected to the receiving coil (51) to receive and store the power; and
a sensor module (60), arranged on the sliding base (40, 41, 42, 43) and electrically connected to the power storage element (52).

2. The intelligent linear motion device (100, 101, 102) with the wireless charging module according to claim 1, wherein at least one embedding groove (11) is formed on an upper surface (12) of the linear rail (10), and each power supply module (30) is correspondingly arranged in each embedding groove (11).

3. The intelligent linear motion device (100) with the wireless charging module according to claim 2, wherein the power module (50) is embedded in an inner surface (401) of the sliding base (40), and the inner surface (401) of the sliding base (40) faces the upper surface (12) of the linear rail (10).

4. The intelligent linear motion device (101) with the wireless charging module according to claim 2, wherein the sliding base (41) comprises a sliding base body (411) and two end covers (412); the two end covers (412) are assembled at the two opposite ends of the sliding base body (411) in a long axis direction (C); one end cover (411) comprises an end cover body (4121) and an extending plate body (4122); the extending plate body (4122) is connected to the end cover body (4121); the end cover body (4121) is assembled at one end of the sliding base body (411), and the extending plate body (4122) is inserted between the sliding base body (411) and the linear rail (10); and the power module (50) is arranged on the extending plate body (4122).

5. The intelligent linear motion device (102, 103, 104) with the wireless charging module according to claim 1, wherein the sliding base (42, 43) comprises a sliding base body (421, 431), two end covers (422, 432) and an installation box (423, 433); the two end covers (422, 432) are assembled at the two opposite ends of the sliding base body (421, 431) in the long axis direction (C); the installation box (423, 433) is assembled at one of the two end covers (422, 432); and the power module (50) is arranged in the installation box (423, 433).

6. The intelligent linear motion device (103, 104) with the wireless charging module according to claim 5, wherein the linear rail (10A) comprises a body (11A) and a bottom plate (12A); the bottom plate (12A) is connected to the body (11A) and extends towards the side in the direction vertical to the long axis direction (C) to expose the body (11A); the transmitting coil (31) of the power supply module (30) is arranged at a position, exposing the body (11A), of the bottom plate (12A); the installation box (433) extends to the position, exposing the body (11A), of the bottom plate (12A); and the power module (50) is arranged in the installation box (433) and corresponds to the position, exposing the body (11A), of the bottom plate (12A).

7. The intelligent linear motion device (103, 104) with the wireless charging module according to claim 1, wherein the linear rail (10A) comprises a body (11A) and a bottom plate (12A); the bottom plate (12A) is connected to the body (11A) and extends towards the side in the direction vertical to the long axis direction (C) of the body (11A) to expose the body (11A); the transmitting coil (31) of the power supply module (30) is arranged at a position, exposing the body (11A), of the bottom plate (12A); the sliding base (43) comprises a sliding base body (431) and an installation box (433); the installation box (433) is assembled on the sliding base body (431) and corresponds to the side, exposing the body (11A), of the bottom plate (12A); and the power module (50) is arranged in the installation box (433).

8. The intelligent linear motion device (104) with the wireless charging module according to claim 6 or 7, wherein one end of the bottom plate (12A) is bent towards the body (11A) side to form a cover cap (13A); and the transmitting coil (31) of the power supply module (30) is covered by the cover cap (13A).

9. The intelligent linear motion device (105, 106) with the wireless charging module according to claim 1, wherein the power supply module (30A, 30B) further comprises a bottom plate (33, 33B); the bottom plate (33, 33B) is connected to the linear rail (10B, 10C), and one end of the bottom plate (33, 33B) extends towards one side of the linear rail (10B, 10C); the transmitting coil (31) is arranged at an extending end of the bottom plate (33, 33B); the sliding base (43) comprises a sliding base body (431) and an installation box (433); the installation box (433) is assembled on the side, corresponding to the extending end, of the bottom plate (33, 33B), of the sliding base body (431); and the power module (50) is arranged in the installation box (433).

10. The intelligent linear motion device (106) with the wireless charging module according to claim 9, further comprising a plurality of power supply modules (30B), wherein the bottom plates (33B) of the power supply modules (30B) are sequentially connected, and the transmitting coils (31) arranged on each bottom plate (33B) are sequentially and electrically connected.

11. The intelligent linear motion device (100, 101, 102, 103, 105, 106) with the wireless charging module according to claim 1, further comprising a dust-proof cover (70) covering the transmitting coil (31).

12. The intelligent linear motion device (102, 103) with the wireless charging module according to claim 1, further comprising a magnetic scale (80) arranged on one side of the linear rail (10, 10A) in the long axis direction (C) of the linear rail (10, 10A), wherein the sensor module (60) comprises a position sensor (61) arranged on the side, corresponding to the magnetic scale (80), of the sliding base (42 , 43).

13. The intelligent linear motion device (100, 101, 102, 103, 104, 105, 106) with the wireless charging module according to claim 1, wherein the linear rail (10, 10A, 10B, 10C) and the sliding base (40, 41, 42, 43) are made of non-magnetic metal or alloy or ceramic.

14. The intelligent linear motion device (100, 101, 102, 103, 104, 105, 106) with the wireless charging module according to claim 1, wherein the sensor module (60) comprises at least one of a force sensor, a vibration sensor, a speed sensor, a position sensor, and a temperature sensor.

## Amended claims

### Amended claims in accordance with Rule 137(2) EPC.

1. An intelligent linear motion device (101) with a wireless charging module, comprising:
a linear rail (10);
a power supply (20);
at least one power supply module (30), arranged on the linear rail (10), each power supply module (30) being electrically connected to the power supply (20), each power supply module (30) comprising a transmitting coil (31);
a sliding base (41), slidably arranged on the linear rail (10), the sliding base (41) comprises a sliding base body (411) and two end covers (412); the two end covers (412) are assembled at the two opposite ends of the sliding base body (411) in a long axis direction (C); one end cover (411) comprises an end cover body (4121) and an extending plate body (4122); the extending plate body (4122) is connected to the end cover body (4121); the end cover body (4121) is assembled at one end of the sliding base body (411), and the extending plate body (4122) is inserted between the sliding base body (411) and the linear rail (10);
a power module (50), arranged on the extending plate body (4122) of the sliding base (41), the power module (50) comprising:
a receiving coil (51), interacting with the transmitting coil (31) to generate power when moving to the power supply module (30); and
a power storage element (52), electrically connected to the receiving coil (51) to receive and store the power; and
a sensor module (60), arranged on the sliding base (41) and electrically connected to the power storage element (52).

2. The intelligent linear motion device (101) with the wireless charging module according to claim 1, wherein at least one embedding groove (11) is formed on an upper surface (12) of the linear rail (10), and each power supply module (30) is correspondingly arranged in each embedding groove (11).

3. An intelligent linear motion device (102, 103, 104, 105, 106) with a wireless charging module, comprising:
a linear rail (10, 10A, 10B, 10C);
a power supply (20);
at least one power supply module (30, 30A, 30B), arranged on the linear rail (10, 10A, 10B, 10C), each power supply module (30, 30A, 30B) being electrically connected to the power supply (20), each power supply module (30, 30A, 30B) comprising a transmitting coil (31);
a sliding base (42, 43), slidably arranged on the linear rail (10, 10A, 10B, 10C), the sliding base (42, 43) comprises a sliding base body (421, 431) and an installation box (423, 433), the installation box (423, 433) is assembled to the sliding base body (421, 431);
a power module (50), arranged in the installation box (423, 433), the power module (50) comprising:
a receiving coil (51), interacting with the transmitting coil (31) to generate power when moving to the power supply module (30, 30A, 30B); and
a power storage element (52), electrically connected to the receiving coil (51) to receive and store the power; and
a sensor module (60), arranged on the sliding base (42, 43) and electrically connected to the power storage element (52).

4. The intelligent linear motion device (102, 103, 104) with the wireless charging module according to claim 3, wherein the sliding base (42, 43) further comprises two end covers (422, 432); the two end covers (422, 432) are assembled at the two opposite ends of the sliding base body (421, 431) in the long axis direction (C); and the installation box (423, 433) is assembled at one of the two end covers (422, 432).

5. The intelligent linear motion device (102) with the wireless charging module according to claim 4, wherein at least one embedding groove (11) is formed on an upper surface (12) of the linear rail (10), and each power supply module (30) is correspondingly arranged in each embedding groove (11).

6. The intelligent linear motion device (103, 104) with the wireless charging module according to claim 4, wherein the linear rail (10A) comprises a body (11A) and a bottom plate (12A); the bottom plate (12A) is connected to the body (11A) and extends towards the side in the direction vertical to the long axis direction (C) to expose the body (11A); the transmitting coil (31) of the power supply module (30) is arranged at a position, exposing the body (11A), of the bottom plate (12A); the installation box (433) extends to the position, exposing the body (11A), of the bottom plate (12A); and the power module (50) is arranged in the installation box (433) and corresponds to the position, exposing the body (11A), of the bottom plate (12A).

7. The intelligent linear motion device (103, 104) with the wireless charging module according to claim 3, wherein the linear rail (10A) comprises a body (11A) and a bottom plate (12A); the bottom plate (12A) is connected to the body (11A) and extends towards the side in the direction vertical to the long axis direction (C) of the body (11A) to expose the body (11A); the transmitting coil (31) of the power supply module (30) is arranged at a position, exposing the body (11A), of the bottom plate (12A); and the installation box (433) is assembled on the sliding base body (431) and corresponds to the side, exposing the body (11A), of the bottom plate (12A).

8. The intelligent linear motion device (104) with the wireless charging module according to claim 6 or 7, wherein one end of the bottom plate (12A) is bent towards the body (11A) side to form a cover cap (13A); and the transmitting coil (31) of the power supply module (30) is covered by the cover cap (13A).

9. The intelligent linear motion device (105, 106) with the wireless charging module according to claim 3, wherein the power supply module (30A, 30B) further comprises a bottom plate (33, 33B); the bottom plate (33, 33B) is connected to the linear rail (10B, 10C), and one end of the bottom plate (33, 33B) extends towards one side of the linear rail (10B, 10C); the transmitting coil (31) is arranged at an extending end of the bottom plate (33, 33B); and the installation box (433) is assembled on the side, corresponding to the extending end, of the bottom plate (33, 33B), of the sliding base body (431).

10. The intelligent linear motion device (106) with the wireless charging module according to claim 9, further comprising a plurality of power supply modules (30B), wherein the bottom plates (33B) of the power supply modules (30B) are sequentially connected, and the transmitting coils (31) arranged on each bottom plate (33B) are sequentially and electrically connected.

11. The intelligent linear motion device (101, 102, 103, 105, 106) with the wireless charging module according to claim 1 or 3, further comprising a dust-proof cover (70) covering the transmitting coil (31).

12. The intelligent linear motion device (102, 103) with the wireless charging module according to claim 1 or 3, further comprising a magnetic scale (80) arranged on one side of the linear rail (10, 10A) in the long axis direction (C) of the linear rail (10, 10A), wherein the sensor module (60) comprises a position sensor (61) arranged on the side, corresponding to the magnetic scale (80), of the sliding base (42 , 43).

13. The intelligent linear motion device (101, 102, 103, 104, 105, 106) with the wireless charging module according to claim 1 or 3, wherein the linear rail (10, 10A, 10B, 10C) and the sliding base (41, 42, 43) are made of non-magnetic metal or alloy or ceramic.

14. The intelligent linear motion device (101, 102, 103, 104, 105, 106) with the wireless charging module according to claim 1 or 3, wherein the sensor module (60) comprises at least one of a force sensor, a vibration sensor, a speed sensor, a position sensor, and a temperature sensor.
